# EUROPÄISCHE PATENTANMELDUNG

(11) **EP 1 304 858 A1**
(43) Veröffentlichungstag der Anmeldung: **23.04.2003**
(21) Anmeldenummer: 01440345.5
(22) Anmeldetag: 18.10.2001
(51) Int. Cl.: H04M 11/04, H04Q 7/22, G08B 25/10

(54) **Verfahren zum Ubermitteln einer Nachricht von einem Telekommunikationsendgerät aus an einen vorgebbaren Empfänger**

(71) Anmelder: ALCATEL, 75008 Paris (FR)
(72) Erfinder: Wajda, Wieslawa Frau Dipl.-Ing., 75210 Keltern (DE)
(74) Vertreter: Schäfer, Wolfgang, Dipl.-Ing.

(57) **Zusammenfassung**

Die Erfindung betrifft ein Verfahren zum Übermitteln einer Nachricht von einem Telekommunikationsendgerät (1) aus über ein Telekommunikationssystem (13) an einen vorgebbaren Empfänger (12). Die zu übermittelnde Nachricht wird vorab aufgezeichnet und eine Kennung des Empfängers (12) vorab gespeichert. Durch eine auslösende Aktion veranlasst wird die Nachricht an den Empfänger (12) übermittelt. Um für Anwender (2) von Telekommunikationsendgeräten (1) eine Möglichkeit zu schaffen, bei Bedarf, insbesondere in einem Notfall, eine vorgebbare Nachricht ohne großen Aufwand, schnell und zuverlässig an einen vorgebbaren Empfänger zu übermitteln, wird vorgeschlagen, dass die aufgezeichnete Nachricht in einem Speicher (5) des Telekommunikationsendgeräts (1) oder in einem Speicher (16) eines Rechengeräts (14) (z. B. einer Basisstation oder eines RNC) des Telekommunikationssystems (13) gespeichert wird. Als auslösende Aktion wird eine Betätigung einer Taste oder einer Tastenkombination auf einer Tastatur (4) des Telekommunikationsendgeräts (1) herangezogen. Alternativ kann auch eine medizinische Funktion des Anwenders (2) überwacht und eine Abweichung der überwachten medizinischen Funktion über vorgebbare Grenzwerte hinaus als auslösende Aktion herangezogen werden.

## Beschreibung

Die vorliegende Erfindung betrifft ein Verfahren zum Übermitteln einer Nachricht von einem Telekommunikationsendgerät aus über ein Telekommunikationssystem an einen vorgebbaren Empfänger. Die zu übermittelnde Nachricht wird vorab aufgezeichnet, und der Empfänger wird vorab gespeichert. Durch eine auslösende Aktion veranlasst wird die Nachricht an den Empfänger übermittelt.

Die Erfindung betrifft außerdem ein Telekommunikationsendgerät mit ersten Mitteln zum Aufzeichnen und zum Abspeichern einer Nachricht und mit zweiten Mitteln zur Eingabe und zum Abspeichern einer Kennung eines vorgebbaren Empfängers.

Außerdem betrifft die vorliegende Erfindung ein Rechengerät eines Telekommunikationssystems, zur Koordination und Weiterleitung von Nachrichten über das Telekommunikationssystem. Ein solches Rechengerät ist bspw. Teil einer Basisstation oder Teil eines RNC (Radio Network Controllers) des Telekommunikationssystems.

Die Erfindung betrifft schließlich auch eine Überwachungseinrichtung zum Überwachen mindestens einer medizinischen Funktion, insbesondere Blutdruck, Blutzuckerspiegel und Herzschlagfrequenz, eines Anwenders eines Telekommunikationsendgeräts. Die Überwachungseinrichtung weist Mittel auf, um eine Abweichung mindestens einer überwachten medizinischen Funktion des Anwenders über vorgebbare Grenzwerte hinaus zu detektieren.

Aus dem Artikel "GPS Based In-Vehicle Emergency Communication System"; Prof. D. Ibrahim, Traffic Control Systems Unit, UK; 30th International Symposium on Automotive Technology and Automation; Mechatronics/Automotive Electronics; Editor: Roller, D.; Croydon, UK: Automotive Autom. 1997; p. 1021-1028 vol. 2 of 2 vol.; Conference: Florence, Italy, 16-19 June 1997 ist ein GPSbasiertes Notfall-Ortungs- und Kommunikationssystem für Kraftfahrzeuge bekannt. Das System umfasst ein Rechengerät (z.B. einen Laptop PC), eine Global Positioning System (GPS)-Ortungseinrichtung und ein Mobiltelefon. Falls ein Notfall eintritt, drückt der Fahrer des Kraftfahrzeugs eine Taste auf dem Rechengerät, und infolge dessen wird eine vorab gespeicherte Nachricht zusammen mit der aktuellen geographischen Position des Kraftfahrzeugs mittels des Mobiltelefons an ein Notfall-Service-Center übermittelt. Das vorgeschlagene System soll die entlang größerer Straßen verteilt angeordneten Notrufsäulen ersetzen.

Ein ähnliches Notfall-Ortungs- und Kommunikationssystem ist auch für die aktuelle S-Klasse (W220) von Mercedes-Benz unter der Bezeichnung "TeleAid" lieferbar. Dieses System übermittelt im Falle eines Unfalls automatisch eine vorab gespeicherte Nachricht (sog. SOS-Telegramm) zusammen mit Angaben über den aktuellen Standort des Fahrzeugs an eine Notrufzentrale. Der Standort wird mittels einer satellitengestützen Ortungseinrichtung (Global Positioning System) ermittelt. In der Notrufzentrale können wichtige Informationen, wie bspw. die Blutgruppe des Fahrzeughalters, abgerufen und dem Rettungsdienst mitgeteilt werden. Dieses System umfasst ein Mobiltelefon, ein in das Fahrzeug integriertes Rechengerät und ein GPS.

Die aus dem Stand der Technik bekannten Notfall-Ortungsund Kommunikationssysteme sind auf den Einsatz in Kraftfahrzeugen beschränkt. Sie benötigen mehrere separate Einheiten, nämlich ein Standard-Mobiltelefon, eine GPS-Einheit und ein Rechengerät. Ein Einsatz außerhalb der Umgebung, in der sie fest installiert sind, ist kaum möglich, da die Systeme aufgrund der Vielzahl der benötigten separaten Einheiten sehr unhandlich und im Notfall kompliziert zu bedienen sind.

Der vorliegenden Erfindung liegt die Aufgabe zugrunde, für Anwender von Telekommunikationsendgeräten eine Möglichkeit zu schaffen, bei Bedarf, insbesondere in einem Notfall, eine vorgebbare Nachricht ohne großen Aufwand, schnell und zuverlässig an einen vorgebbaren Empfänger zu übermitteln.

Zur Lösung dieser Aufgabe schlägt die vorliegende Erfindung ausgehend von dem Verfahren der eingangs genannten Art vor, dass eine beliebige Nachricht aufgezeichnet und eine Kennung eines beliebigen Empfängers gespeichert wird, die aufgezeichnete Nachricht in einem Speicher des Telekommunikationsendgeräts oder in einem Speicher eines Rechengeräts des Telekommunikationssystems zur Koordination und Weiterleitung von Nachrichten über das Telekommunikationssystem gespeichert wird und die gespeicherte Nachricht der Kennung des Empfängers zugeordnet wird.

Erfindungsgemäß wird also ein Verfahren zur Übermittlung einer Nachricht vorgeschlagen, das völlig ortsunabhängig eingesetzt werden kann. Eine Person, die eine Nachricht übermitteln möchte, muss lediglich ein mobiles oder stationäres Telekommunikationsendgerät zur Verfügung haben. Auf dem Telekommunikationsendgerät wird vor der eigentlichen Nachrichtenübermittlung eine bei Bedarf zu übermittelnde Nachricht aufgezeichnet und in einem Speicher des Telekommunikationsendgerät oder in einem Speicher des Rechengeräts des Telekommunikationssystems gespeichert. Das Rechengerät ist bspw. eine Basisstation oder ein RNC (Radio Network Controller). Der gespeicherten Nachricht wird eine Kennung eines beliebigen Empfängers, an den die Nachricht bei Bedarf übermittelt werden soll, zugeordnet. Die gespeicherte Nachricht wird dann bei Bedarf durch eine auslösende Aktion veranlasst an den Empfänger übermittelt.

Das auslösende Ereignis kann beliebiger Art sein. Es ist denkbar, dass ein Anwender des Telekommunikationsendgeräts direkt auf dieses einwirkt, bspw. mittels Tastendruck oder mittels Sprachbefehle (außerhalb aber auch während eines Telefongesprächs), und die auslösende Aktion so hervorruft. Es ist aber auch denkbar, dass die auslösende Aktion durch Vorrichtungen, die an das Telekommunikationsendgerät angeschlossen sind, hervorgerufen wird. So könnte bspw. eine satellitengesteuerte Ortungseinrichtung (z. B. Global Positioning System, GPS oder GLONAS) die auslösende Aktion hervorrufen, sobald der Anwender einen vorgebbaren geographischen Bereich verlässt. Ebenso wäre es denkbar, die Position anhand der Funkzelle, in der sich ein Mobilfunkteilnehmer befindet, und anhand der Stärke eines Mobilfunksignals (z. B. GSM-Signals) zu ermitteln. Die Vorrichtungen können extern sein, vorzugsweise sind sie jedoch in das Telekommunikationsendgerät integriert.

Die zu übermittelnde Nachricht kann auf Befehl des Anwenders über Telekommunikationsendgerät je nach Bedarf aufgezeichnet und in dem Speicher abgelegt werden. Dadurch ist es möglich, den Inhalt der Nachrichten an besondere Situationen anzupassen. So kann bspw. vor dem nächtlichen Durchqueren einer dunklen Grünanlage oder vor dem Betreten eines unübersichtlichen Parkhauses eine Nachricht aufgezeichnet werden. Die Nachricht enhält bspw. eine Ortsangabe der Grünanlage oder des Parkhauses und Angaben über den benutzten Eingang zur Grünanlage oder zum Parkhaus und über den Ausgang, über den beabsichtigt ist, die Grünanlage oder das Parkhaus wieder zu verlassen, oder die genaue Bezeichnung des Parkplatzes, auf dem das eigene Fahrzeug in dem Parkhaus abgestellt ist. Auf diese Weise ist in Notfallsituationen nach dem Übermitteln der Nachricht eine besonders rasche und effektive Hilfe möglich.

Mit der vorliegenden Erfindung wird erstmals ein Notrufsystem auf Grundlage eines Telekommunikationssystems vorgeschlagen, das völlig ortsunabhängig mobil einsetzbar ist. Außerdem können Nachrichten beliebigen Inhalts übermittelt werden.

Der Empfänger bzw. eine Kennung des Empfängers kann an einer beliebigen Stelle gespeichert werden. Die Kennung kann bspw. in einem Rechengerät des Telekommunikationssystems, bspw. in einer Basisstation oder einem RNC eines Mobilfunk-Telekommunikationssystems, gespeichert sein. Gemäß einer vorteilhaften Weiterbildung der vorliegenden Erfindung wird jedoch vorgeschlagen, dass eine Kennung des Empfängers in einem Speicher des Telekommunikationsendgeräts oder in einem Speicher des REchengeräts gespeichert wird. Die Kennung ist vorzugsweise eine Telefonnummer des Empfängers, kann jedoch auch eine email o. ä. sein. Als Speicher des Telekommunikationsendgeräts kann ein gesonderter Speicher oder aber ein bereits vorhandener Rufnummernspeicher eingesetzt werden. So wäre es bspw. denkbar, eine gespeicherte Nachricht mit einem der in dem Rufnummernspeicher gespeicherten Empfänger zu verknüpfen. Auf eine gesonderte Eingabe des Empfängers bzw. seiner Kennung kann dann verzichtet werden. Ebenso kann die Kennung in einem beliebigen Speicher des Rechengeräts abgelegt werden. Das Ablegen der Nachricht und/oder der Kennung des Empfängers in einem Speicher des Rechengeräts hat den Vorteil, dass zum Übermitteln der Nachricht an den Empfänger lediglich ein die Übermittlung auslösender Code von dem Telekommuniaktionsendgerät an das Rechengerät gesandt werden muss. Das Übersenden des Codes kann wesentlich schneller erfolgen, als die Übermittlung der gesamten Nachricht einschließlich der Kennung des Empfängers. Dadurch ist es möglich, in einer Notfallsituation selbst dann die vollständige Nachricht zu übermitteln, wenn das Telekommunikationsendgerät unmittelbar nach dem Übersenden des Codes zerstört wird oder die Datenübertragung von dem Telekommunikationsendgerät zu dem Rechengerät auf andere Weise unterbunden wird.

Gemäß einer bevorzugten Ausführungsform der vorliegenden Erfindung wird vorgeschlagen, dass als auslösende Aktion eine Taste oder eine Tastenkombination auf einer Tastatur des Telekommunikationsendgeräts betätigt wird. Nach der Betätigung der Taste oder der Tastenkombination erfolgt die Übermittlung der gespeicherten Nachricht an den dieser Nachricht zugeordneten Empfänger vollautomatisch. Die Übermittlung der Nachricht erfolgt beim Einsatz in einem Mobilfunk-Telekommunikationssystem (ähnlich der Wahl von Notrufnummern 110 oder 112) vorzugsweise auch dann, wenn das Telekommunikationsendgerät nicht bei dem Telekommunikationssystem angemeldet ist.

Des Weiteren wird vorgeschlagen, dass als auslösende Aktion das Ausbleiben der Betätigung einer Taste oder Tastenkombination auf einer Tastatur des Telekommunikationsendgeräts innerhalb einer vorgebbaren Zeit herangezogen wird. Bei diesem als inverser Modus bezeichneten Betrieb des Mobiltelefons wird eine Nachricht nach dem Aktivieren der Notfallfunktion automatisch an den der Nachricht zugeordneten Empfänger übermittelt, falls nicht innerhalb einer vorgebbaren Zeit eine Taste oder Tastenkombination auf der Tastatur des Telekommunikationsendgeräts betätigt wird.

Alternativ wird vorgeschlagen, dass mindestens eine medizinische Funktion, insbesondere Blutdruck, Blutzuckerspiegel und Herzschlagfrequenz, eines Anwenders des Telekommunikationsendgeräts überwacht und als auslösende Aktion eine Abweichung mindestens einer überwachten medizinischen Funktion des Anwenders über vorgebbare Grenzwerte hinaus herangezogen wird. Dadurch kann das erfindungsgemäße Verfahren auch als Notfallmelder in der häuslichen Krankenpflege eingesetzt werden. Falls die medizinische Funktion des Anwenders mit ausreichender Genauigkeit und Zuverlässigkeit überwacht werden kann, könnte mit dieser alternativen Ausführungsform auch eine Gefahrensituation für den Anwender automatisch erkannt und als auslösende Aktion an das Telekommunikatinsendgerät übertragen werden. So könnten bspw. ein erhöhter Herzschlag und Schweißausbrüche des Anwenders auf eine Gefahrensituation hindeuten.

Um Speicherplatz zu sparen wird die Nachricht vorteilhafterweise komprimiert gespeichert. Um die Zeitdauer der Übermittlung der Nachricht zu verringern, wird die Nachricht vorzugsweise komprimiert an den Empfänger übermittelt und beim Empfänger dekomprimiert.

Gemäß einer anderen vorteilhaften Weiterbildung der vorliegenden Erfindung wird vorgeschlagen, an die zu übermittelnde Nachricht vor der Übermittlung zusätzliche aktuelle Informationen angehängt und zusammen mit der Nachricht an den Empfänger übermittelt werden. Die aktuellen Informationen umfassen vorteilhafterweise Angaben über eine aktuelle Position eines Anwenders des Telekommunikationsendgeräts, insbesondere mittels einer satellitengestützten Ortungseinrichtung automatisch erfasste Positionsangaben.

Als eine weitere Lösung der Aufgabe der vorliegenden Erfindung wird ausgehend von dem Telekommunikationsendgerät der eingangs genannten Art vorgeschlagen, dass das Telekommunikationsendgerät des Weiteren aufweist:
- dritte Mittel, um der abgespeicherten Nachricht die Kennung des abgespeicherten Empfängers zuzuordnen;
- vierte Mittel zur Detektion einer auslösenden Aktion; und
- fünfte Mittel, um die Nachricht durch die auslösende Aktion veranlasst automatisch an den Empfänger zu übermitteln.

Gemäß einer vorteilhaften Weiterbildung der vorliegenden Erfindung wird vorgeschlagen, dass die Kennung eine Telefonnummer des Empfängers ist.

Gemäß einer bevorzugten Ausführungsform der vorliegenden Erfindung wird vorgeschlagen, dass die vierten Mittel eine Betätigung einer Taste oder einer Tastenkombination des Telekommunikationsendgeräts als auslösende Aktion detektieren.

Alternativ wird vorgeschlagen, dass die vierten Mittel eine Überwachungseinrichtung zum Überwachen mindestens einer medizinischen Funktion, insbesondere Blutdruck, Blutzuckerspiegel und Herzschlagfrequenz, eines Anwenders des Telekommunikationsendgeräts und eine Auswerteeinheit zur Detektion einer Abweichung mindestens einer überwachten medizinischen Funktion des Anwenders über vorgebbare Grenzwerte hinaus als auslösendes Signal umfassen.

Als noch eine weiter Lösung der Aufgabe der vorliegenden Erfindung wird ausgehend von dem Rechengerät der eingangs genannten Art vorgeschlagen, dass das Rechengerät aufweist:
- erste Mittel zum Abspeichern von über ein Telekommunikationsendgerät des
   Telekommunikationssystems aufgezeichneten Nachrichten;
- zweite Mittel zum Abspeichern einer Kennung eines vorgebbaren Empfängers;
- dritte Mittel, um der abgespeicherten Nachricht die Kennung des abgespeicherten Empfängers zuzuordnen;
- vierte Mittel zum Empfang eines vorgebbaren Signals als auslösende Aktion; und
- fünfte Mittel, um die Nachricht durch die auslösende Aktion veranlasst automatisch an den Empfänger zu übermitteln.
   Das Rechengerät ist bspw. Teil einer Funkfeststation oder einer Basisstation oder eines RNC eines Mobilfunk-Telekommunikationssystems. Ebenso kann das Rechengerät Teil einer Vermittlungsstelle unterschiedlicher Netzebenen (Zentralvermittlungsstelle, ZVSt; Hauptvermittlung, HVSt; Knotenvermittlung, KVSt oder Endvermittlung, EVSt) sein.

Schließlich wird als noch eine weitere Lösung der Aufgabe der vorliegenden Erfindung ausgehend von der Überwachungseinrichtung der eingangs genannten Art vorgeschlagen, dass die Überwachungseinrichtung mit dem Telekommunikationsendgerät des Anwenders in Kommunikationsverbindung steht und ein Alarmsignal an das Telekommunikationsendgerät sendet, falls die Mittel eine Abweichung mindestens einer überwachten medizinischen Funktion des Anwenders über die vorgebbaren Grenzwerte hinaus detektieren. Das Alarmsignal stellt die auslösende Aktion dar, infolge der eine vorgebbare Nachricht an einen vorgebbaren Empfänger vollautomatisch übermittelt wird.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw.

Darstellung in der Beschreibung bzw. in der Zeichnung. Es zeigen:
- Fig. 1: ein Notrufsystem zur Realisierung des erfindungsgemäßen Verfahrens gemäß einer bevorzugten Ausführungsform; und
- Fig. 2: ein Ablaufdiagramm des erfindungsgemäßen Verfahrens.

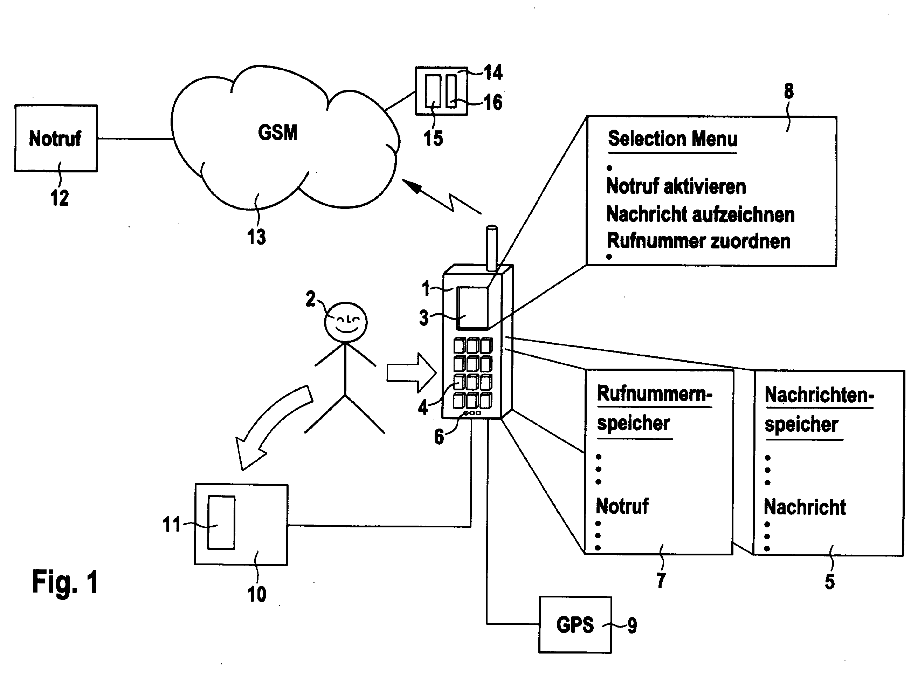

In Figur 1 ist ein Notrufsystem zur Realisierung des erfindungsgemäßen Verfahrens dargestellt. Dieses Notrufsystem umfasst als zentrale Komponente ein Telekommunikationsendgerät 1, im vorliegenden Fall ein Mobiltelefon. Als Schnittstelle zu einem Anwender 2 weist das Mobiltelefon 1 einen Bildschirm 3 zur Ausgabe und eine Tastatur 4 zur Eingabe auf.

Des Weiteren verfügt das Mobiltelefon 1 über einen Nachrichtenspeicher 5, in dem Sprach- oder Textnachrichten abgespeichert werden können. Sprachnachrichten werden über ein Mikrophon 6 des Mobiltelefons 1 aufgezeichnet. Textnachrichten können über die Tastatur 4 eingegeben werden. Unter anderem ist in dem Nachrichtenspeicher 5 auch eine Sprachnachricht "Nachricht" gespeichert. Außerdem verfügt das Mobiltelefon über einen Rufnummernspeicher 7, in dem beliebige Rufnummern mit zugehörigen Namen und u.U. mit weiteren Informationen abgespeichert werden können. Unter anderem ist in dem Rufnummernspeicher 7 auch die Rufnummer von "Notruf" gespeichert. Der Empfänger "Notruf" selbst ist mit dem Bezugszeichen 12 bezeichnet und steht über ein Telekommunikationssystem 13, im vorliegenden Ausführungsbeispiel mit einem Mobilfunk-Telekommunikationsnetzwerk nach dem GSM-Standard, in Kommunikationsverbindung.

Teil des Mobilfunk-Telekommunikationssystems 13 ist eine Basisstation 14, die eine Funkzelle des Telekommunikationssystems 13 koordiniert. Zur Abwicklung der Koordinationsvorgänge ist in der Basisstation 14 ein Mikroprozessor 15 vorgesehen, auf dem ein entsprechendes Computerprogramm ablauffähig ist. Das Computerprogramm ist in einem Speicher 16 der Basisstation 14 abgespeichert und wird zur Abarbeitung befehlsweise oder als ganzes an den Mikroprozessor 15 übertragen. In dem Speicher 16 oder in einem anderen Speicher der Basisstation 14 kann auch die "Nachricht" und/oder die Kennung des Empfängers "Notruf" 12 abgespeichert sein.

Das Mobiltelefon 1 verfügt gegenüber aus dem Stand der Technik bekannten Mobiltelefonen über erweiterte Funktionalitäten zur Realisierung des erfindungsgemäßen Verfahrens. Diese erweiterten Funktionalitäten sind in einem Auswahlmenü "Selection Menu" 8, das auf dem Bildschirm 3 des Mobiltelefons 1 ausgegeben wird, über zusätzliche Menüpunkte aufrufbar. Unter anderem sind zusätzliche Menüpunkte "Notruf aktivieren", "Nachricht aufzeichnen" und "Rufnummer zuordnen" vorgesehen.

An das Mobiltelefon 1 angeschlossen bzw. integraler Bestandteil des Mobiltelefons 1 ist eine satellitengestütze Ortungseinrichtung 9 (z. B. Global Positioning System, GPS oder GLONAS). Über die Ortungseinrichtung 9 kann die geographische Position des Mobiltelefons 1 und damit indirekt auch des Anwenders 2 ermittelt werden. Ebenfalls an das Mobiltelefon 1 angeschlossen bzw. integraler Bestandteil des Mobiltelefons 1 ist eine Überwachungseinrichtung 10 zum Überwachen mindestens einer medizinischen Funktion des Anwenders 2. Als medizinische Funktionen werden insbesondere der Blutdruck, der Blutzuckerspiegel und/oder die Herzschlagfrequenz des Anwenders 2 überwacht. Die Überwachungseinrichtung 10 weist eine Auswerteeinheit 11 auf, um eine Abweichung mindestens einer überwachten medizinischen Funktion des Anwenders 2 über vorgebbare Grenzwerte hinaus zu detektieren. Die Auswerteeinheit 11 umfasst bspw. einen Mikroprozessor, auf dem ein Computerprogramm ablauffähig ist, das die mindestens eine medizinische Funktion überwacht, mit Grenzwerten vergleicht und Abweichungen der überwachten Funktionen über die Grenzwerte hinaus detektiert.

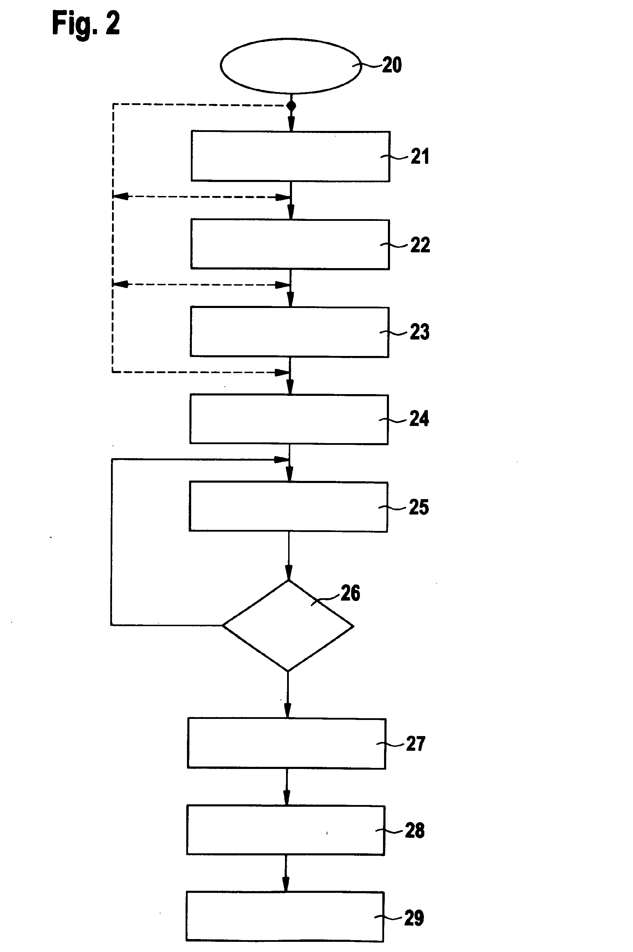

Nachfolgend wird das erfindungsgemäße Verfahren anhand des in Figur 2 dargestellten Ablaufdiagramms näher erläutert. Das Verfahren beginnt in einem Funktionsblock 20. Der Anwender 2 des Mobiltelefons 1 geht nachts zu Fuß durch eine Großstadt nach Hause. Vor besonderen Gefahrenpunkten, bspw. einem dunklen Park oder einer unübersichtlichen Unterführung, trifft der Anwender 2 Vorkehrungen für einen möglicherweise notwendigen Notruf. Dazu wählt der Anwender 2 zunächst in einem Funktionsblock 21 den Menüpunkt "Nachricht aufzeichnen" aus dem Auswahlmenü 8 und spricht eine individuelle Nachricht in das Mikrofon 6, die in dem Nachrichtenspeicher 5 des Mobiltelefons 1 oder in dem Speicher 16 der Basisstation 14 abgespeichert wird. Anschließend gibt der Anwender 2 in einem Funktionsblock 22 über die Tastatur 4 des Mobiltelefons 1 die Rufnummer des Empfängers "Notruf" ein. Die Rufnummer "Notruf" wird in dem Rufnummernspeicher 7 des Mobiltelefons 1 oder in dem Speicher 16 der Basisstation 14 gespeichert. In einem Funktionsblock 23 wird der Rufnummer "Notfall" die gespeicherte "Nachricht" zugeordnet, indem der Anwender 2 den Menüpunkt "Rufnummer zuordnen" aus dem Auswahlmenü 8 auswählt.

Die Verfahrensschritte aus den Funktionsblöcken 21 bis 23 können einzeln oder gemeinsam übersprungen werden, was in Fig. 2 durch gestrichelte Pfeile verdeutlicht ist. In einem solche Fall wird bpsw. eine bereits in dem Nachrichtenspeicher 5 oder dem Speicher 16 gespeicherte Nachricht oder eine bereits in dem Rufnummernspeicher 7 oder dem Speicher 16 gespeicherte Rufnummer herangezogen oder eine früher getroffene Zuordnung zwischen Nachricht und Rufnummer beibehalten. In einem Funktionsblock 24 wird durch Auswahl des Menüpunkts "Notruf aktivieren" aus dem Auswahlmenü 8 die Notruffunktion des Mobiltelefons 1 aktiviert. Dieses sendet nun die gespeicherte Nachricht an den gespeicherten Empfänger, sobald eine auslösende Aktion auftritt.

In einem Funktionsblock 25 wird die auslösende Aktion aufgenommen. Die auslösende Aktion kann bspw. eine Betätigung einer Taste oder einer Tastenkombination auf der Tastatur 4 sein. Es ist denkbar, dass der Anwender 2 vorab definieren kann, welche Taste oder Tastenkombination eine auslösende Aktion hervorrufen soll. Alternativ kann die auslösende Aktion aber auch ein Alarmsignal der Überwachungseinrichtung 10 sein, falls eine oder mehrere überwachte medizinische Funktionen des Anwenders 2 vorgebbare Grenzwerte überschritten haben. Das Alarmsignal kann leitungsgebunden oder drahtlos an das Mobiltelefon 1 übertragen werden. In einem Abfrageblock 26 wird überprüft ob eine auslösende Aktion aufgetreten ist. Falls nein, wird das Verfahren wieder bei dem Funktionsblock 25 fortgesetzt.

Falls jedoch eine auslösende Aktion aufgetreten ist, wird in einem Funktionsblock 27 die gespeicherte Nachricht aus dem Nachrichtenspeicher 5 bzw. aus dem Speicher 16 aufgerufen. An die Nachricht wird in einem Funktionsblock 28 die von der Ortungseinrichtung 9 ermittelte geographische Position des Anwenders 2 angehängt und in einem Funktionsblock 29 an den der Nachricht zugeordneten Empfänger "Notruf" über das Telekommunikationssystem 13 übermittelt. In einem Funktionsblock 30 ist das Verfahren beendet.

Die Nachricht kann komprimiert in dem Nachrichtenspeicher 5 oder in dem Speicher 16 der Basisstation 14 abgelegt sein. Auch die Übermittlung der Nachricht kann in komprimierter Form erfolgen, wobei die Nachricht dann beim Empfänger "Notruf" 12 dekomprimiert wird. Die Übermittlung der Nachricht erfolgt (ähnlich der Wahl von Notrufnummern 110 oder 112) auch dann, wenn das Mobiltelefon 1 nicht bei dem Telekommunikationssystem 13 angemeldet, sondern lediglich eingeschaltet ist.

Es ist sogar denkbar, dass die Nachricht selbst dann übermittelt wird, wenn das Mobiltelefon 1 ausgeschaltet ist. Ein ausgeschaltetes Mobiltelefon 1 befindet sich nämlich streng betrachtet lediglich in einem Standby-Modus, aus dem es durch Betätigen der Ein/Aus-Taste in den normalen Betriebsmodus überführt werden kann. Es wäre durchaus möglich, ein Mobiltelefon 1 derart zu verändern, dass es auf eine Betätigung einer bestimmten Taste oder Tastenkombination im ausgeschalteten Zustand hin die Nachricht an den Empfänger versendet.

Des Weiteren ist ein als inverser Modus bezeichneter Betrieb des Mobiltelefons denkbar. Dabei wird eine Nachricht nach dem Aktivieren der Notfallfunktion automatisch an den vorgegebenen Empfänger übermittelt, falls nicht innerhalb einer vorgebbaren Zeit eine vorgebbare Taste oder Tastenkombination auf der Tastatur (4) des Mobiltelefons (1) betätigt wird.

## Patentansprüche

1. Verfahren zum Übermitteln einer Nachricht von einem Telekommunikationsendgerät (1) aus über ein Telekommunikationssystem (13) an einen vorgebbaren Empfänger (12), wobei die zu übermittelnde Nachricht vorab aufgezeichnet und der Empfänger (12) vorab gespeichert wird und die Nachricht durch eine auslösende Aktion veranlasst an den Empfänger (12) übermittelt wird, **dadurch gekennzeichnet, dass** eine beliebige Nachricht aufgezeichnet und eine Kennung eines beliebigen Empfängers gespeichert wird, die aufgezeichnete Nachricht in einem Speicher (5) des Telekommunikationsendgeräts (1) oder in einem Speicher (16) eines Rechengeräts (15) des Telekommunikationssystems (13) zur Koordination und Weiterleitung von Nachrichten über das Telekommunikationssystem (13) gespeichert wird und die gespeicherte Nachricht der Kennung des Empfängers (12) zugeordnet wird.

2. Verfahren nach Anspruch 1, **dadurch gekennzeichnet, dass** die Kennung des Empfängers (12) in einem Speicher (7) des Telekommunikationsendgeräts (1) oder in einem Speicher (16) des Rechengeräts (15) des Telekommunikationssystems (13) gespeichert wird.

3. Verfahren nach Anspruch 1 oder 2, **dadurch gekennzeichnet, dass** als auslösende Aktion eine Taste oder eine Tastenkombination auf einer Tastatur (4) des Telekommunikationsendgeräts (1) betätigt wird.

4. Verfahren nach Anspruch 1 oder 2, **dadurch gekennzeichnet, dass** als auslösende Aktion das Ausbleiben der Betätigung einer Taste oder Tastenkombination auf einer Tastatur (4) des Telekommunikationsendgeräts (1) herangezogen wird.

5. Verfahren nach Anspruch 1 oder 2, **dadurch gekennzeichnet, dass** mindestens eine medizinische Funktion, insbesondere Blutdruck, Blutzuckerspiegel und Herzschlagfrequenz, eines Anwenders (2) des Telekommunikationsendgeräts (1) überwacht und als auslösende Aktion eine Abweichung mindestens einer überwachten medizinischen Funktion des Anwenders (2) über vorgebbare Grenzwerte hinaus herangezogen wird.

6. Verfahren nach einem der Ansprüche 1 bis 5, **dadurch gekennzeichnet, dass** die Nachricht komprimiert gespeichert wird.

7. Verfahren nach einem der Ansprüche 1 bis 6, **dadurch gekennzeichnet, dass** die Nachricht komprimiert übermittelt und beim Empfänger (12) dekomprimiert wird.

8. Verfahren nach einem der Ansprüche 1 bis 7, **dadurch gekennzeichnet, dass** an die zu übermittelnde Nachricht vor der Übermittlung zusätzliche aktuelle Informationen angehängt und zusammen mit der Nachricht an den Empfänger (12) übermittelt werden.

9. Verfahren nach Anspruch 8, **dadurch gekennzeichnet, dass** die aktuellen Informationen Angaben über eine aktuelle Position eines Anwenders (2) des Telekommunikationsendgeräts (1), insbesondere mittels einer satellitengestützten Ortungseinrichtung (9), automatisch erfasste Positionsangaben, umfassen.

10. Telekommunikationsendgerät (1) mit ersten Mitteln (5, 6) zum Aufzeichnen und zum Abspeichern einer Nachricht und mit zweiten Mitteln (4, 7) zur Eingabe und zum Abspeichern einer Kennung eines vorgebbaren Empfängers (12), **dadurch gekennzeichnet, dass** das Telekommunikationsendgerät (1) des Weiteren aufweist:
- dritte Mittel, um der abgespeicherten Nachricht die Kennung des abgespeicherten Empfängers (12) zuzuordnen;
- vierte Mittel zur Detektion einer auslösenden Aktion; und
- fünfte Mittel, um die Nachricht durch die auslösende Aktion veranlasst automatisch an den Empfänger (12) zu übermitteln.

11. Telekommunikationsendgerät (1) nach Anspruch 10, **dadurch gekennzeichnet, dass** die Kennung eine Telefonnummer des Empfängers (12) ist.

12. Telekommunikationsendgerät (1) nach Anspruch 10 oder 11, **dadurch gekennzeichnet, dass** die vierten Mittel eine Betätigung einer Taste oder einer Tastenkombination einer Tastatur (4) des Telekommunikationsendgeräts (1) als auslösende Aktion detektieren.

13. Telekommunikationsendgerät (1) nach einem der Ansprüche 10 bis 12, **dadurch gekennzeichnet, dass** die vierten Mittel eine Überwachungseinrichtung (10) zum Überwachen mindestens einer medizinischen Funktion, insbesondere Blutdruck, Blutzuckerspiegel und Herzschlagfrequenz, eines Anwenders (2) des Telekommunikationsendgeräts (1) mit einer Auswerteeinheit (11) zur Detektion einer Abweichung mindestens einer überwachten medizinischen Funktion des Anwenders (2) über vorgebbare Grenzwerte hinaus als auslösende Aktion umfassen.

14. Rechengerät (15) eines Telekommunikationssystems (13), zur Koordination und Weiterleitung von Nachrichten über das Telekommunikationssystem (13), **dadurch gekennzeichnet, dass** das Rechengerät (15) aufweist:
- erste Mittel zum Abspeichern von über ein Telekommunikationsendgerät (1) des Telekommunikationssystems (13) aufgezeichneten Nachrichten;
- zweite Mittel zum Abspeichern einer Kennung eines vorgebbaren Empfängers (12);
- dritte Mittel, um der abgespeicherten Nachricht die Kennung des abgespeicherten Empfängers (12) zuzuordnen;
- vierte Mittel zum Empfang einer auslösenden Aktion; und
- fünfte Mittel, um die Nachricht durch die auslösende Aktion veranlasst automatisch an den Empfänger (12) zu übermitteln.

15. Überwachungseinrichtung (10) zum Überwachen mindestens einer medizinischen Funktion, insbesondere Blutdruck, Blutzuckerspiegel und Herzschlagfrequenz, eines Anwenders (2) eines Telekommunikationsendgeräts (1), wobei die Überwachungseinrichtung (10) Mittel (11) aufweist, um eine Abweichung mindestens einer überwachten medizinischen Funktion des Anwenders (2) über vorgebbare Grenzwerte hinaus zu detektieren, **dadurch gekennzeichnet, dass** die Überwachungseinrichtung (10) mit dem Telekommunikationsendgerät (1) des Anwenders (2) in Kommunikationsverbindung steht und ein Alarmsignal an das Telekommunikationsendgerät (1) sendet, falls die Mittel (11) eine Abweichung mindestens einer überwachten medizinischen Funktion des Anwenders (2) über die vorgebbaren Grenzwerte hinaus detektieren.
